# EUROPEAN PATENT APPLICATION

(11) **EP 1 136 165 A1**
(43) Date of publication of application: **26.09.2001**
(21) Application number: 99944851.7
(22) Date of filing: 28.09.1999
(51) Int. Cl.: B23F 23/06, B23Q 11/10

(54) **HOBBING MACHINE FOR DRY CUTTING**

(71) Applicant: Mitsubishi Heavy Industries, Ltd., Tokyo 100-0005 (JP)
(72) Inventor: EGAWA, Tsuneo, Kyoto Machinery Works, Ritto-cho, Kurita-gun, Shiga 520-3080 (JP); TOKAWA, Takahide, Kyoto Machinery Works, Ritto-cho, Kurita-gun, Shiga 520-3080 (JP); KAGE, Hirofumi, Kyoto Machinery Works, Ritto-cho, Kurita-gun, Shiga 520-3080 (JP); NISHIMURA, Yukihisa, Kyoto Machinery Works, Ritto-cho, Kurita, Shiga 520-3080 (JP)
(74) Representative: Kern, Ralf M., Dipl.-Ing. Ralf M. Kern & Partner
(86) International application number: JP9905269
(87) International publication number: WO0123129

(57) **Abstract**

A heat-insulating material 46 is disposed on a fixture table 19 and a support center 21 at those portions which come into contact with a workpiece 23, and a cooling unit is employed for cooling the fixture table 19 and the support center 21, thereby preventing heat transmission from the workpiece 23 under milling to the fixture table 19 and the support center 21 and controlling the fixture table 19 and the support center 21 to a predetermined temperature. Thus, even when the temperature of the workpiece 23 rises as a result of the workpiece 23 undergoing dry-cutting; i.e., cutting without use of cutting oil, temperature rise in the fixture table 19 and the support center 21 is suppressed.

## Description

### TECHNICAL FIELD

The present invention relates to a dry-cutting hobbing machine for dry-cutting gear teeth; i.e., for cutting gear teeth without use of cutting oil.

### BACKGROUND ART

A hobbing machine for milling gear teeth is a typical machine tool for milling gear teeth. Hobbing machines include a vertical bobbing machine, which cuts gear teeth in a workpiece supported about a substantially vertical center axis, and a horizontal hobbing machine, which cuts gear teeth in a workpiece supported about a substantially horizontal center axis.

In a hobbing machine, a hob which is supported so as to be rotatably driven is engaged with a workpiece supported by a fixture, to thereby cut gear teeth on an outer circumference of the workpiece. The rotating hob is fed toward the workpiece to thereby cut in the workpiece gear teeth having a predetermined profile. During cutting, cutting oil is supplied to a portion of the workpiece which is undergoing cutting, to thereby lubricate and cool the portion of the workpiece as well as to cool the fixture.

As is the case with other industrial fields, the hobbing field has undergone various improvements toward increasing productivity and toward saving labor. In addition, in recent years, the hobbing field has been called to take environmental measures. The hobbing field can meet such a demand through employment of so-called dry cutting, in which cutting oil is not used during cutting. Cutting oil not only emits an offensive odor and causes smudging with splashed oil with a resultant impairment in the work environment, but also raises a problem in that treatment of waste oil involves atmospheric or environmental contamination.

A main problem to solve in the introduction of dry cutting into the hobbing field is devising measures against wear of a hob. Measures for suppressing wear of a hob include use of a carbide hob and use of a hob formed of highspeed tool steel and coated with a wear-resistant material.

However, during dry cutting, the temperature of a workpiece increases, and thus-generated heat is transmitted to a fixture, thereby gradually increasing the temperature of the fixture. When a new workpiece is attached to the thus-heated fixture, the workpiece undergoes thermal expansion. If the thus-expanded workpiece undergoes cutting, overcutting will result; i.e., machining accuracy will be impaired.

The present invention has been accomplished in view of the foregoing, and an object of the invention is to provide a dry-cutting hobbing machine capable of preventing a temperature increase of a fixture even during dry cutting.

### DISCLOSURE OF THE INVENTION

The present invention provides a dry-cutting hobbing machine for dry-cutting, without use of cutting oil, gear teeth in a workpiece supported on a fixture, characterized by comprising cooling means for cooling the fixture by means of fluid.

The fixture can be cooled by the cooling means. Thus, even when the temperature of the workpiece rises as a result of the workpiece undergoing dry cutting without supply of cutting oil thereto, a temperature rise of the fixture can be suppressed.

The present invention provides a dry-cutting hobbing machine for dry-cutting, without use of cutting oil, gear teeth in a workpiece supported on a fixture, characterized in that a heat-insulating material is disposed at a portion of the fixture which comes into contact with the workpiece.

The heat-insulating material prevents heat transmission from the workpiece to the fixture. Thus, even when the temperature of the workpiece rises as a result of the workpiece undergoing dry cutting without supply of cutting oil thereto, a temperature rise of the fixture can be suppressed.

The present invention provides a dry-cutting hobbing machine for dry-cutting, without use of cutting oil, gear teeth in a workpiece supported on a fixture, characterized by comprising cooling means for cooling the fixture by means of fluid and characterized in that a heat-insulating material is disposed at a portion of the fixture which comes into contact with the workpiece.

The fixture can be cooled by means of the cooling means, and the heat-insulating material prevents heat transmission from the workpiece to the fixture. Thus, even when the temperature of the workpiece rises as a result of the workpiece undergoing dry cutting without supply of cutting oil thereto, a temperature rise of the fixture can be suppressed.

Further, the dry-cutting hobbing machine of the present invention is characterized by the following. The cooling means assumes the form of a cooling unit for supplying cooling water to a cooling-water path formed in the fixture so as to effect water cooling. The cooling unit comprises a cooling-water tank, and cooling water contained in the cooling-water tank is circulated through the cooling-water path. The cooling-water tank comprises a temperature sensor and a cooling fan, and, when the temperature sensor detects that the temperature of cooling water contained in the cooling-water tank has become equal to or greater than a predetermined value, the cooling fan is operated so as to maintain the temperature of cooling water contained in the cooling-water tank at the predetermined value. The cooling-water path is disposed in the fixture in the vicinity of a portion of the fixture which comes into contact with a workpiece.

Further, the dry-cutting hobbing machine of the present invention is characterized in that the heat-insulating material is made of ceramic.

### BRIEF DESCRIPTION OF THE DRAWINGS

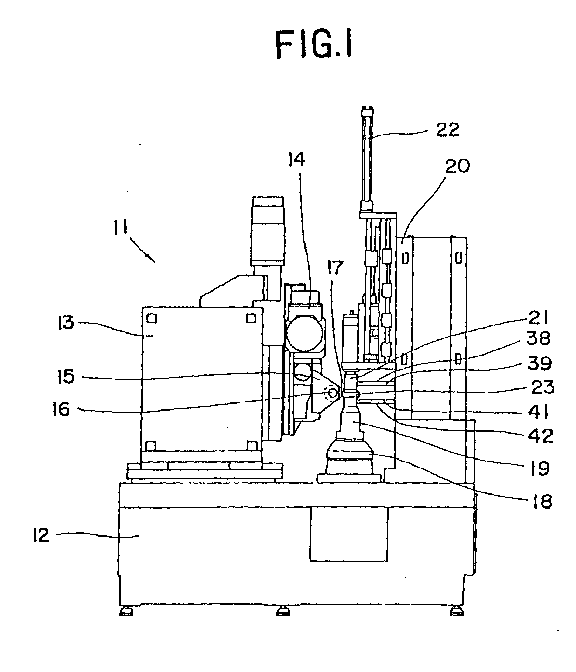

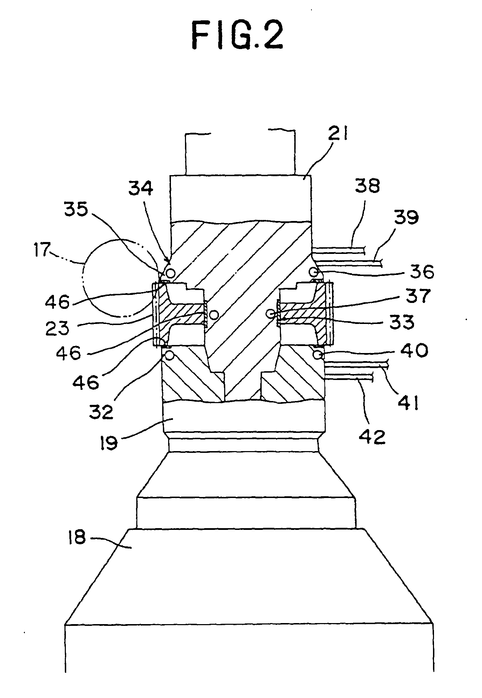

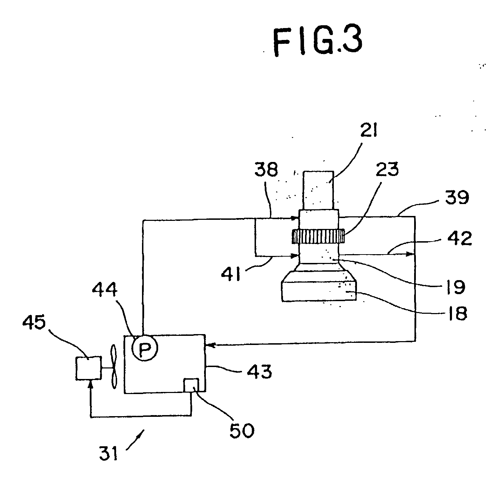

FIG. 1 is a side view of a dry-cutting hobbing machine according to an embodiment of the present invention; FIG. 2 is an enlarged view of a main portion of the dry-cutting hobbing machine of FIG. 1; and FIG. 3 is a circuit diagram of a cooling unit.

### BEST MODE FOR CARRYING OUT THE INVENTION

The present invention will next be described in detail with reference to the drawings.

As shown in FIG. 1, a column 13 is supported on a bed 12 of a dry-cutting hobbing machine 11 in such a manner so as to reciprocate freely in a horizontal direction (in a right-and-left direction in FIG. 1). A lifting head 14 is supported on a front face of the column 13 in a vertically slidable manner. A hob head 15 is supported on the lifting head 14 in such a manner so as to be rotatable abut a horizontal axis. A hob 17 is attached to the hob head 15 via a hob shaft 16.

A table 18 is mounted on the bed 12 of the dry-cutting hobbing machine 11 in such a manner so as to be rotatable about a vertical axis. A fixture table 19 is supported on the table 18. A support column 20 is disposed upright on the bed 12 in opposition to the column 13 with the table 18 located therebetween. A support center 21, which moves along the center axis of rotation of the table 18, is supported on the support column 20 in a vertically movable manner. A lifting cylinder 22 mounted on the support column 20 is driven so as to move the support center 21 vertically.

A workpiece 23 is placed on the table 18 via the fixture table 19. The lifting cylinder 22 is driven so as to lower the support center 21, thereby supporting the workpiece 23 between the fixture table 19 and the support center 21. As the table 18 is rotated, the workpiece 23 is rotated about the vertical axis. That is, the fixture table 19 and the support center 21 constitute a fixture.

A cooling unit 31 is provided for use with the fixture table 19 and the support center 21 in order to suppress temperature rise. A heat-insulating material is disposed on the fixture table 19 and on the support center 21 at a portion which comes into contact with the workpiece 23, thereby preventing heat transmission thereto from the workpiece 23. The cooling unit 31 and the heat-insulating material will be described with reference to FIGS. 2 and 3.

As shown in FIG. 2, when the workpiece 23 is supported between the fixture table 19 and the support center 21, the workpiece 23 is placed on a peripheral edge portion 32 of the upper surface of the fixture table 19, so that the lower surface of the workpiece 23 is in contact with the peripheral edge portion 32; a shaft portion of the support center 21 extends through the workpiece 23 such that an outer circumferential surface 33 thereof is in contact with an inner circumferential surface of the workpiece 23; and a peripheral edge portion 35 of the lower surface of a pressing portion 34 of the support center 21 presses the workpiece 23 such that the upper surface of the workpiece 23 is in contact with the peripheral edge portion 35.

Pipes 36 and 37, serving as cooling-water paths for circulation of cooling water, are disposed in the support center 21 in the vicinity of the outer circumferential surface 33 of the shaft portion and in the vicinity of the peripheral edge portion 35 of the pressing portion 34, respectively. The pipes 36 and 37 for circulation of cooling water communicate with a cooling-water inlet pipe 38 and a cooling-water outlet pipe 39, which are connected to the support center 21. A pipe 40, serving as a cooling-water path for circulation of cooling water, is disposed in the fixture table 19 in the vicinity of the peripheral edge portion 32. The pipe 40 for circulation of cooling water communicates with a cooling-water inlet pipe 41 and a cooling-water outlet pipe 42, which are connected to the fixture table 19.

As shown in FIG. 3, the cooling-water inlet pipes 38 and 41 are connected to a pump 44 of a cooling-water tank 43, so that cooling water is transferred under pressure thereto through driving of the pump 44. The cooling-water outlet pipes 39 and 42 are connected to the cooling-water tank 43. Cooling water transferred under pressure from the pump 44 circulates through the pipes 36, 37, and 40 and is then returned to the cooling-water tank 43 through the cooling-water outlet pipes 39 and 42. The cooling water tank 43 is equipped with a cooling fan 45. The cooling fan 45 is driven when the temperature of cooling water contained in the cooling tank 43 as measured by means of a temperature sensor 51 becomes equal to or greater than a predetermined value. Accordingly, cooling water contained in the cooling tank 43 is maintained at a predetermined temperature.

Cooling water which is maintained at a predetermined temperature is circulated through the pipes 36, 37, and 40 so as to suppress temperature rise in the fixture; i.e., in the fixture table 19 and the support center 21. In the above-described embodiment, the water-cooling unit 31 circulates cooling water through the pipes 36, 37, and 40 for effecting water cooling. However, other cooling fluid, such as cooling oil or cooling air, may be circulated through the pipes 36, 37, and 40.

As shown in FIG. 2, a ceramic plate serving as a heat-insulating material 46 is attached to each of those portions of the fixture which come into contact with the workpiece 23; specifically, the peripheral edge portion 32 of the upper surface of the fixture table 19, the peripheral edge portion 35 of the lower surface of the pressing portion 34 of the support center 21, and the outer circumferential surface 33 of the shaft portion of the support center 21. The thus-attached heat-insulating material 46 prevents heat transmission from the workpiece 23 under milling to the fixture; i.e., to the fixture table 19 and the support center 21.

The heat-insulating material 46 may be disposed in place through coating of ceramic or through thermal spraying of ceramic. A metal having a thermal conductivity lower than that of iron, for example, stainless steel may be used as the heat-insulating material 46.

When the dry-cutting hobbing machine 11 is to be used for cutting gear teeth in the workpiece 23, the workpiece 23 is supported between the fixture table 19 and the support center 21 to thereby attach the workpiece 23 to the table 18. The hob 17 is fixedly attached to the hob shaft 16 of the hob head 15. The table 18 is rotated to thereby rotate the workpiece 23. Also, the hob shaft 16 is rotated to thereby rotate the hob 17. While the hob 17 and the workpiece 23 are synchronously rotated, the hob 17 is fed into the workpiece 23 for cutting. A cutting-edge portion of the hob 17 cuts gear teeth in the periphery of the workpiece 23. During cutting, no cutting oil is supplied; i.e., dry cutting is performed.

During cutting, the pump 44 of the cooling unit 31 is driven so as to transfer cooling water, which is contained in the cooling-water tank 43 and is controlled to a predetermined temperature, through the cooling-water inlet pipes 38 and 41. Thus-transferred cooling water circulates through the pipes 36, 37, and 40 and is then returned to the cooling-water tank 43 through the cooling-water outlet pipes 39 and 42. Thus are cooled a portion of the fixture table 19 located in the vicinity of the peripheral edge portion 32 of the upper surface of the fixture table 19; a portion of the support center 21 located in the vicinity of the peripheral edge portion 35 of the lower surface of the pressing portion 34 of the support center 21; and a portion of the support center 21 located in the vicinity of the outer circumferential surface 33 of the shaft portion of the support center 21.

Since the heat-insulating material 46 is attached to a surface of the fixture which is in contact with the workpiece 23, the fixture table 19 and the support center 21 are thermally insulated from the workpiece 23 which is undergoing milling.

Accordingly, even when the temperature of the workpiece 23 rises during cutting, the heat-insulating material 46 prevents heat transmission from the workpiece 23 to the fixture table 19 and the support center 21. Further, the fixture table 19 and the support center 21 are cooled by means of cooling water which is controlled to a predetermined temperature, whereby temperature rise thereof is suppressed.

Accordingly, even when the temperature of the workpiece 23 rises as a result of the workpiece 23 undergoing dry-cutting; i.e., cutting without use of cutting oil, the fixture table 19 and the support center 21 are free from temperature rise, thereby avoiding thermal deformation of the dry-cutting hobbing machine 11 and that of a newly loaded workpiece 23. Thus, high cutting accuracy can be maintained.

The above embodiment is described while mentioning the dry-cutting hobbing machine 11 which includes the heat-insulating material 46 disposed on a surface of the fixture and the cooling unit 31 for cooling the fixture table 19 and the support center 21. However, the dry-cutting hobbing machine 11 may include merely either the heat-insulating material 46 or the cooling unit 31. The above embodiment is described while mentioning a vertical hobbing machine. However, the present invention is also applicable to a horizontal hobbing machine, which cuts gear teeth in a workpiece supported in a substantially horizontal state.

## Claims

1. A dry-cutting hobbing machine for dry-cutting, without use of cutting oil, gear teeth in a workpiece supported on a fixture, **characterized by** comprising cooling means for cooling the fixture by means of fluid.

2. A dry-cutting hobbing machine for dry-cutting, without use of cutting oil, gear teeth in a workpiece supported on a fixture, **characterized in that** a heat-insulating material is disposed at a portion of the fixture which comes into contact with the workpiece.

3. A dry-cutting hobbing machine for dry-cutting, without use of cutting oil, gear teeth in a workpiece supported on a fixture, **characterized by** comprising cooling means for cooling the fixture by means of fluid and **characterized in that** a heat-insulating material is disposed at a portion of the fixture which comes into contact with the workpiece.

4. A dry-cutting hobbing machine as described in claim 1 or 3, **characterized in that** the cooling means assumes a form of a cooling unit for supplying cooling water to a cooling-water path formed in the fixture so as to effect water cooling.

5. A dry-cutting hobbing machine as described in claim 4, **characterized in that** the cooling unit comprises a cooling-water tank, and cooling water contained in the cooling-water tank is circulated through the cooling-water path.

6. A dry-cutting hobbing machine as described in claim 5, **characterized in that** the cooling-water tank comprises a temperature sensor and a cooling fan, and, when the temperature sensor detects that the temperature of cooling water contained in the cooling-water tank has become equal to or greater than a predetermined level, the cooling fan is operated so as to maintain the temperature of cooling water contained in the cooling-water tank at the predetermined level.

7. A dry-cutting hobbing machine as described in any one of claims 4 to 6, **characterized in that** the cooling-water path is disposed in the fixture in the vicinity of a portion of the fixture which comes into contact with a workpiece.

8. A dry-cutting hobbing machine as described in claim 2 or 3, **characterized in that** the heat-insulating material is made of ceramic.
